Europäisches Patentamt

European Patent Office

Office européen des brevets

(11) Numéro de publication : **0 343 025 B1**

# (12) FASCICULE DE BREVET EUROPEEN

(45) Date de publication du fascicule du brevet :
**30.12.92 Bulletin 92/53**

(51) Int. Cl.⁵ : **B60N 2/02**, B60N 2/44

(21) Numéro de dépôt : **89401110.5**

(22) Date de dépôt : **20.04.89**

(54) **Siège de véhicule automobile comportant des bourrelets latéraux réglables.**

(30) Priorité : **20.05.88 FR 8806801**

(43) Date de publication de la demande :
**23.11.89 Bulletin 89/47**

(45) Mention de la délivrance du brevet :
**30.12.92 Bulletin 92/53**

(84) Etats contractants désignés :
**DE GB IT**

(56) Documents cités :
**EP-A- 0 140 177**
**EP-A- 0 229 737**
**GB-A- 2 191 690**

(56) Documents cités :
**PATENT ABSTRACTS OF JAPAN, vol. 10, no.
59 (M-459)[2116], 8 mars 1986, page 164 M 459;
& JP-A-60 206 741 (NITSUSANSHIYATAI K.K.)
18-10-1985
PATENT ABSTRACTS OF JAPAN, vol 7, no. 59
(M-199)[1204], 11 mars 1983, page 164 M 459; &
JP-A-57 205 238 (TACHIKAWA SPRINGK.K.)
16-12-1982**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Chardon,Louis
10 route des Champs
F-25200 Montbéliard (FR)**

(74) Mandataire : **Bouget, Lucien et al
Cabinet Lavoix 2, Place d'Estienne d'Orves
F-75441 Paris Cédex 09 (FR)**

EP 0 343 025 B1

## Description

L'invention concerne un siège de véhicule automobile comportant des bourrelets latéraux réglables.

Les sièges de véhicule automobile comportent généralement une armature rigide en tube d'acier recouverte par une garniture souple dont la forme plus ou moins complexe permet d'obtenir de bonnes conditions de confort pour l'usager.

De tels sièges comportent très souvent des bourrelets latéraux en saillie par rapport à la surface du siège, sur les côtés du dossier et/ou de l'assise.

De tels bourrelets latéraux assurent le maintien du corps de l'usager et offrent ainsi un confort supplémentaire, dans la mesure où ils sont parfaitement adaptés à la morphologie et à la corpulence de l'usager.

Dans le cas où des usagers de corpulence variable sont amenés à utiliser le siège du véhicule, il est nécessaire de disposer de moyens de réglage des bourrelets latéraux dans la direction transversale du siège.

EP-A-0 229 737, correspondant au préambule de la revendication 1, propose un siège de véhicule automobile comportant une armature rigide et une garniture souple recouvrant l'armature et constituant au moins deux bourrelets latéraux réglables dans la direction transversale du siège, de façon à maintenir efficacement le corps de l'usager quelle que soit sa corpulence. Le but de l'invention est de proposer un siège de ce type dans lequel le réglage s'effectue sans modification sensible de la forme générale du siège.

Dans ce but, chacun des bourrelets latéraux comporte :

- un support d'articulation fixé rigidement sur l'armature et définissant un axe d'articulation situé dans un plan latéral sensiblement longitudinal par rapport au siège,
- une plaque d'appui fixée rigidement sur l'armature suivant un plan latéral sensiblement longitudinal,
- une poche gonflable, l'invention étant caractérisée par le fait que chacun desdits bourrelets latéraux comporte également :
- un boîtier, formant coque, recouvert par la garniture constituant le bourrelet proprement dit, de façon à donner au bourrelet une forme générale sensiblement indépendante de son réglage, monté pivotant sur l'axe d'articulation dans la direction transversale du siège, la plaque d'appui étant disposée au moins partiellement à l'intérieur du boîtier, la poche gonflable se trouvant à l'intérieur du boîtier, intercalée entre la paroi intérieure du boîtier et la plaque d'appui, du côté intérieur du siège,
- et au moins un dispositif élastique de rappel intercalé entre la paroi intérieure du boîtier et la plaque d'appui du côté extérieur du siège.

Afin de bien faire comprendre l'invention, on va maintenant décrire, à titre d'exemple non limitatif, en se référant aux figures jointes en annexe, un mode de réalisation d'un siège de véhicule automobile comportant des bourrelets latéraux réglables suivant l'invention.

La figure 1 est une vue générale en perspective d'un siège de véhicule automobile comportant des bourrelets latéraux réglables.

La figure 2 est une vue en perspective éclatée montrant le montage du boîtier d'un bourrelet latéral sur l'armature des sièges.

La figure 3 est une vue en perspective montrant le support d'articulation du bourrelet réglable.

La figure 4 est une vue en coupe transversale d'un bourrelet latéral suivant 4-4 de la figure 1 ou de la figure 2.

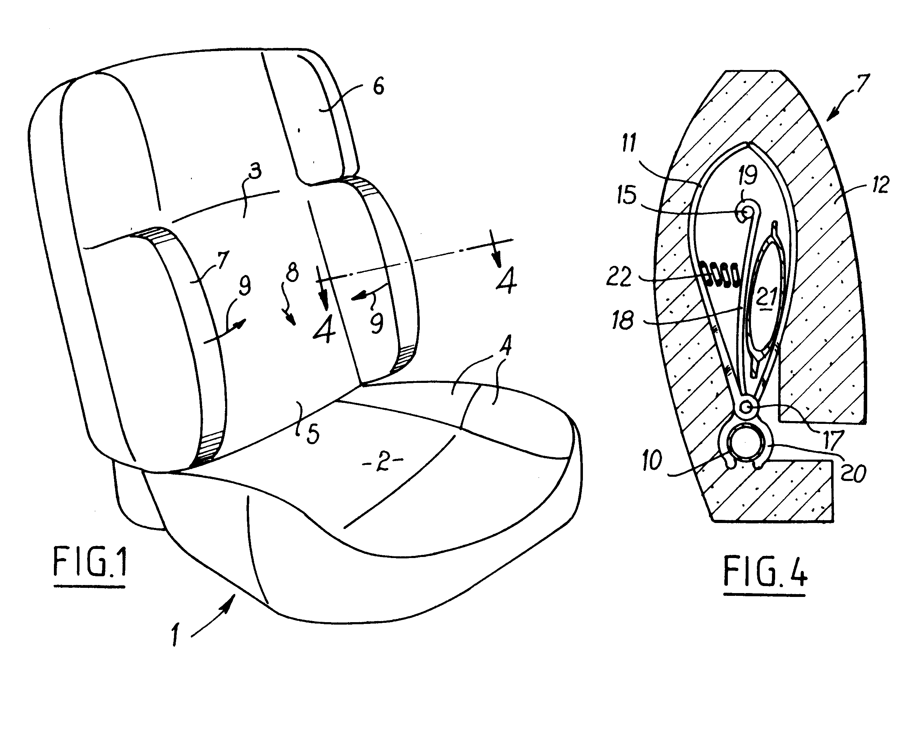

Sur la figure 1, on voit un siège de véhicule automobile désigné de manière générale par le repère 1. Ce siège comporte une assise 2 et un dossier 3 dont la forme est étudiée pour offrir le meilleur confort possible à l'usager. L'assise 2 comporte des bourrelets latéraux 4 en saillie par rapport à la surface du siège.

Le dossier 3 comporte également des bourrelets latéraux 6 à sa partie supérieure pouvant servir d'appui-tête ainsi que deux bourrelets latéraux réglables 7 suivant l'invention sur la plus grande partie de sa hauteur, de part et d'autre d'une zone d'appui lombaire 5 dont la courbure peut être réglée dans la direction de la flèche 8, en fonction de la morphologie de l'usager. Le réglage de courbure de la zone d'appui lombaire 5 peut être obtenu par exemple grâce à une enveloppe gonflable disposée sous la garniture du siège 1.

Le réglage des bourrelets latéraux 7 dans la direction transversale du siège, en fonction de la corpulence de l'usager, peut être obtenu par pivotement de ces bourrelets latéraux, suivant les flèches 9, comme il sera décrit plus loin.

La partie inférieure du dossier qui intervient pour une grande part dans le confort de l'usager peut donc être adaptée à la morphologie et à la corpulence de cet usager, à la fois grâce à un dispositif de réglage connu de la zone d'appui lombaire et au dispositif de réglage transversal des bourrelets latéraux 7, comme il sera décrit plus loin.

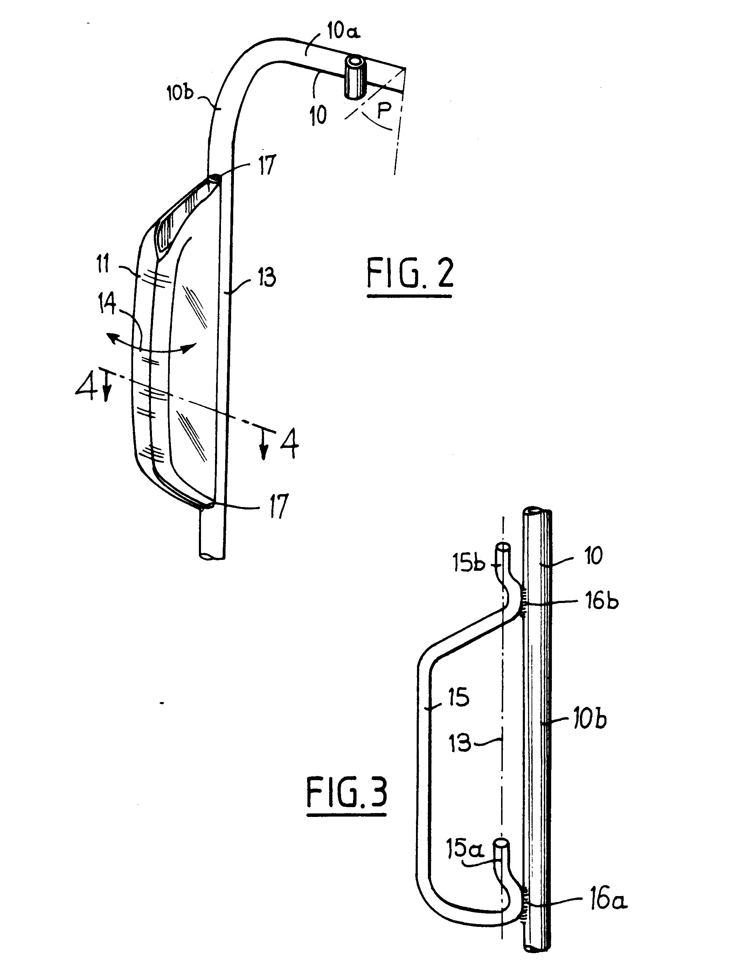

Sur les figures 2, 3 et 4, on voit une partie de l'armature tubulaire du dossier 3 du siège 1, située sur un côté latéral de ce siège comportant un bourrelet réglable 7.

L'armature tubulaire 10 comporte une branche transversale 10a dirigée suivant la largeur du siège et une branche 10b sensiblement perpendiculaire à la branche transversale 10a, inclinée suivant l'inclinaison du dossier 3 et disposée dans un plan longitudinal du siège correspondant généralement à un plan vertical de direction longitudinale par rapport au véhicule.

Comme il est visible sur les figures 2 et 4, le bourrelet latéral 7 comporte un boîtier interne rigide 11 constitué par une coque creuse en tôle ou en matière plastique et donnant sa forme au bourrelet latéral 7. Le boîtier 11 est revêtu extérieurement par une garniture souple 12 constituée par exemple par un corps en mousse recouvert par le tissu du siège.

Sur la figure 2, on a représenté uniquement le boîtier 11, à l'exclusion de la garniture 12. Le boîtier 11 est monté pivotant autour d'un axe d'articulation 13 parallèle à la branche 10b de l'armature 10, l'axe 13 étant situé dans un plan longitudinal parallèle au plan médian vertical P du siège 1. Le pivotement du boîtier 11 s'accompagne donc d'un déplacement transversal figuré par la flèche 14 sur la figure 2.

L'axe d'articulation 13 est matérialisé par deux bouts d'arbres 15a et 15b constitués par les extrémités d'un étrier 15 en fil d'acier rigide soudé en 16a et 16b sur la branche 10b de l'armature et disposé dans le plan longitudinal du siège contenant l'axe d'articulation 13 et l'axe de la branche tubulaire 10b.

Le boîtier 11 comporte, à chacune de ses extrémités, un logement 17 dans lequel vient s'engager au montage l'un des bouts d'arbres 15a ou 15b, pour constituer une charnière d'articulation.

L'étrier 15 constituant un support d'articulation est disposé à l'intérieur du boîtier 11 qui est lui-même monté pivotant sur ce support d'articulation 15.

Une plaque d'appui 18 est également montée à l'intérieur du boîtier 11 et disposée sensiblement suivant le plan longitudinal passant par l'axe d'articulation 13. La plaque d'appui 18 constituée par exemple par une tôle comporte à ses extrémités des parties profilées d'assemblage 19 et 20 assurant le clipage de la plaque d'appui 18 sur la partie supérieure de l'étrier 15 et sur la branche 10b de l'armature 10, respectivement. La plaque d'appui 18 est ainsi fixée rigidement sur l'armature du siège 1.

Comme il est visible sur la figure 4, le boîtier 11 renferme une enveloppe souple gonflable 21 qui peut être constituée par exemple par une membrane en caoutchouc. L'enveloppe 21 est intercalée entre la surface intérieure du boîtier 11 et l'une des faces de la plaque d'appui 18, du côté du bourrelet 7 situé vers l'intérieur du siège 1. La face de la plaque 18 en contact avec l'enveloppe 21 est dirigée vers le bourrelet latéral 7 situé sur le côté opposé du siège 1.

Un ensemble de ressorts de rappel tel que 22, est intercalé entre l'autre face de la plaque d'appui 18, c'est-à-dire la face de cette plaque d'appui dirigée vers l'extérieur du siège, et la surface intérieure du boîtier 11 lui faisant face.

La poche gonflable 21 est reliée par une tuyauterie souple non représentée à un moyen de gonflage manuel tel qu'une poire ou à des moyens électro-pneumatiques qui peuvent être actionnés par l'usager pour assurer un gonflage et une dilatation réglable de la poche 21.

De tels moyens de gonflage d'une enveloppe souple associée à un siège de véhicule sont bien connus, et utilisés par exemple dans le cas d'une enveloppe ou poche gonflable disposée dans la partie d'appui lombaire du siège comme indiqué plus haut.

Le fonctionnement du siège suivant l'invention, en ce qui concerne le réglage transversal des bourrelets latéraux sera décrit ci-dessous.

Lorsque les poches 21 des bourrelets latéraux du siège 1 ne sont pas soumises à une pression d'air par actionnement des moyens de gonflage, les ressorts 22 en appui sur la plaque 18 font pivoter les boîtiers 11 et leur garniture constituant le bourrelet proprement dit vers l'extérieur du siège 1, jusqu'au moment où la surface intérieure du boîtier 11 vient en butée sur la partie d'extrémité 19 de la plaque d'appui 18.

Les bourrelets latéraux sont alors dans leur position d'écartement maximal. Cette position correspond à la position de réglage du siège pour les usagers de forte corpulence.

Lorsqu'un occupant de plus faible corpulence s'installe dans le siège suivant l'invention, il lui est possible de régler la position des bourrelets latéraux par actionnement d'un moyen manuel tel qu'une poire ou d'un moyen électro-pneumatique tel qu'une pompe motorisée ayant pour effet d'envoyer de l'air comprimé dans chacune des poches 21 des bourrelets latéraux du siège et d'assurer ainsi le gonflage de ces poches.

Du fait de leur accroissement de volume, les poches 21 en appui sur l'une des faces des plaques 18 entraînent le boîtier correspondant 11 en rotation autour de son axe de pivotement 13. Simultanément, les ressorts 22 sont comprimés.

Le gonflage des poches et le pivotement des bourrelets latéraux vers l'intérieur est poursuivi jusqu'au moment où la position de confort maximal est obtenue par l'usager. Les bourrelets latéraux sont alors en équilibre sous l'effet antagoniste des poches gonflables et des ressorts.

Il est à remarquer que les circuits de gonflage des deux bourrelets latéraux du siège doivent être totalement indépendants, de façon à éviter, lors de l'appui du corps de l'usager sur l'un des bourrelets, par exemple dans un virage, le transfert de l'air de la poche gonflable de ce bourrelet à la poche gonflable du bourrelet opposé. Il en résulterait en effet des conséquences néfastes sur le maintien et le confort de l'usager.

Le siège suivant l'invention présente l'avantage de comporter des bourrelets latéraux réglables en fonction de la corpulence de l'occupant du siège, ces bourrelets ayant cependant une forme géométrique stable et constante au cours des réglages. Le réglage du siège tout en permettant d'obtenir un maintien efficace de l'usager, ne modifie donc pas la forme générale et le style du siège.

L'adaptation de bourrelets latéraux réglables sur un siège de véhicules demande d'autre part des modifications faibles de la structure du siège. Cette structure reste très simple. Le réglage des bourrelets latéraux du siège est lui-même très simple et très fiable, puisqu'une seule commande pneumatique permet d'obtenir le résultat voulu.

L'invention ne se limite pas au mode de réalisation qui a été décrit.

C'est ainsi qu'on peut imaginer des boîtiers ou plaques d'appui d'une forme différente de celle qui a été décrite, notamment un boîtier constitué de deux parties qui peuvent être assemblées l'une à l'autre, par exemple par clipage, collage, . . . , pour faciliter le montage de la structure interne du bourrelet, ces éléments pouvant être montés sur l'armature du siège, d'une manière différente de celle qui a été décrite. Le support d'articulation peut être constitué par une pièce de tôle emboutie, à la place d'une structure en fil métallique rigide. L'articulation du boîtier sur l'armature par l'intermédiaire du support d'articulation peut être réalisée de manière différente de celle qui a été décrite.

Le rappel du boîtier peut être réalisé aussi bien par des ressorts pneumatiques que par des ressorts métalliques. Ce rappel peut être assuré par une poche totalement étanche renfermant une certaine quantité d'air et intercalée entre la plaque d'appui et la surface intérieure du boîtier.

Les dispositifs de gonflage des poches d'actionnement des bourrelets latéraux peuvent être de tout type, en fonction du résultat recherché.

Le siège de véhicule automobile suivant l'invention peut comporter des bourrelets latéraux réglables associés aussi bien à sa partie d'assise qu'à son dossier.

Le siège suivant l'invention peut combiner des bourrelets latéraux réglables avec d'autres moyens de réglage du siège en fonction de la morphologie ou de la corpulence de l'usager, tels que des moyens de réglage lombaire ou des dispositifs d'appui réglables des jambes de l'usager.

## Revendications

1. Siège de véhicule automobile comportant une armature (10) rigide et une garniture souple recouvrant l'armature et constituant au moins deux bourrelets latéraux (7) réglables dans la direction transversale du siège, chacun des bourrelets latéraux (7) comportant:
   - un support d'articulation (15) fixé rigidement sur l'armature (10) et définissant un axe d'articulation (13) situé dans un plan latéral sensiblement longitudinal par rapport au siège (1),
   - une plaque d'appui (18) fixée rigidement sur l'armature (10) suivant un plan latéral sensiblement longitudinal,
   - une poche gonflable (21), caractérisé par le fait que chacun desdits bourrelets latéraux (7) comporte également :
   - un boîtier (11), formant coque, recouvert par la garniture (12) constituant le bourrelet (7) proprement dit de façon à donner au bourrelet une forme générale sensiblement indépendante de son réglage, monté pivotant sur l'axe d'articulation (13) dans la direction transversale (14) du siège (1), la plaque d'appui (18) étant disposée au moins partiellement à l'intérieur du boîtier (11) ladite poche gonflable (21) se trouvant à l'intérieur du boîtier (11), intercalée entre la paroi intérieure du boîtier (11) et la plaque d'appui (18), du côté intérieur du siège (1),
   - et au moins d'un dispositif élastique de rappel (22) intercalé entre la paroi intérieure du boîtier (11) et la plaque d'appui (18) du côté extérieur du siège (1).

2. Siège de véhicule suivant la revendication 1, caractérisé par le fait que la plaque d'appui (18) est fixée à l'une de ses extrémités sur une barre (10b) de l'armature (10) et à son autre extrémité sur une partie du support d'articulation (15).

3. Siège de véhicule suivant la revendication 2, caractérisé par le fait que la plaque d'appui (18) est fixée par clippage sur l'armature (10) et sur le support d'articulation (15).

4. Siège de véhicule suivant l'une quelconque des revendications 1 à 3 caractérisé par le fait que le support d'articulation (15) est constitué par une structure rigide en fil métallique plié fixé par soudage sur une barre (10b) de l'armature (10) et constituant deux bouts d'arbres alignés (15a, 15b) parallèles à la barre d'armature (10).

5. Siège de véhicule suivant l'une quelconque des revendications 1 à 4 caractérisé par le fait que l'enveloppe gonflable (21) est reliée pour son gonflage, à un dispositif manuel tel qu'une poire.

6. Siège de véhicule suivant l'une quelconque des revendications 1 à 4 caractérisé par le fait que l'enveloppe gonflable (21) est reliée, pour son gonflage, à un dispositif électro-pneumatique tel qu'une pompe motorisée.

7. Siège de véhicule suivant l'une quelconque des revendications 1 à 6 caractérisé par le fait que le boîtier (11) est constitué de deux demi-boîtier comportant des moyens d'assemblage.

8. Siège de véhicule automobile suivant l'une quelconque des revendications 1 à 7 comportant une partie d'assise (2) et un dossier (3) caractérisé par le fait qu'il comporte des bourrelets latéraux réglables (7) uniquement sur les côtés du dossier (3).

9. Siège de véhicule automobile suivant l'une quelconque des revendications 1 à 7 comprenant une partie d'assise (2) et un dossier (3) caractérisé par le fait qu'il comporte des bourrelets latéraux réglables aussi bien sur les côtés de sa partie d'assise (2) que sur les côtés du dossier (3).


**Patentansprüche**

1. Kraftfahrzeugsitz, der eine starre Bewehrung (10) und einen biegsamen Überzug aufweist, der die Bewehrung abdeckt und mindestens zwei seitliche Verdickungen (7), welche in der Querrichtung des Sitzes einstellbar sind, wobei jede der seitlichen Verdickungen (7) aufweist:
   - eine Gelenkunterstützung (15), die starr auf der Bewehrung (10) befestigt ist und eine Drehachse (13) definiert, die sich in einer seitlichen im wesentlichen longitudinalen Ebene bezüglich dem Sitz (1) befindet;
   - eine Stützplatte (18), die starr auf der Bewehrung (10) gemäß einer seitlichen im wesentlichen longitudinalen Ebene befestigt ist;
   - eine aufblasbare Tasche (21) dadurch gekennzeichnet, daß die seitlichen Verdickungen außerdem aufweisen;
   - ein Gehäuse (11) das eine Schale bildet und durch die Garnitur bedeckt ist, die die eigentliche Verdickung (7) bildet um der Verdickung eine Form zu geben, die im wesentlichen unabhängig von ihrer Einstellbarkeit ist, und daß in der Querrichtung (14) des Sitzes (1) gelenkig auf der Drehachse (13) montiert ist, wobei die Stützplatte (18) mindestens teilweise innerhalb dem Gehäuse (11) angeordnet ist, wobei die aufblasbare Tasche (21) sich innerhalb dem Gehäuse (11) befindet, und zwar zwischen der inneren Wand des Gehäuses (11) und der Stützplatte (18) an der inneren Seite des Sitzes (1) und
   mindestens einer elastischen Rückrufvorrichtung (22), die zwischen der inneren Wand des Gehäuses (11) und der Stützplatte (18) an der äußeren Seite des Sitzes (1) angeordnet ist.

2. Kraftfahrzeugsitz nach Anspruch 1, dadurch gekennzeichnet, daß die Stützplatte (18) mit einem ihrer Enden auf einem Stab (10b) der Bewährung (10) und mit ihrem anderen Ende auf einen Teil der Gelenkunterstützung (15) befestigt ist.

3. Kraftfahrzeugsitz nach Anspruch 2, dadurch gekennzeichnet, daß die Stützplatte (18) durch Klippen der Bewährung (10) und auf der Gelenkunterstüzung (15) befestigt ist.

4. Kraftfahrzeugsitz nach einem der vorhegehenden Ansprüche 1 bis 3, dadurch gekennzeichnet, daß die Gelenkunterstüzung (15) durch eine starre Struktur gebildet wird, die aus einem gebogenen Metalldraht besteht, der durch Schweißung auf einer Welle (10b) der Bewehrung (10) befestigt ist, und zwei ausgerichteten Wellenenden (15a, 15b), die parallel an der Bewehrung (10) sind.

5. Kraftfahrzeugsitz nach einem der vorhergehenden Ansprüche 1 bis 4, dadurch gekennzeichnet, daß die aufblasbare Tasche (21) für ihres Aufblasen mit einer manuellen Vorrichtung sowie einer Birne verbunden ist.

6. Kraftfahrzeugsitz nach einem der vorhergehenden Ansprüche 1 bis 4, dadurch gekennzeichnet, daß die aufblasbare Tasche (21) für ihres Aufblasen mit einer elekropneumatischen Vorrichtung, sowie einer Motorpumpe verbunden ist.

7. Kraftfahrzeugsitz nach einem der vorhergehenden Ansprüche 1 bis 6, dadurch gekennzeichnet, daß das Gehäuse (11) aus zwei Halb-Gehäusen besteht, die Montage-Einrichtungen aufweisen.

8. Kraftfahrzeugsitz nach einem der vorhergehenden Ansprüche 1 bis 7, der ein Sitzteil (2) und Rücken (3) aufweist, dadurch gekennzeichnet, daß er einstellbaren seitlichen Verdickungen (7) ausschließlich auf den Seiten des Rückens (3) aufweist.

9. Kraftfahrzeugsitz nach einem der vorhergehenden Ansprüche 1 bis 7, der einen Sitzteil (2) und einen Rücken (3) aufweist, dadurch gekennzeichnet, daß er einstellbare seitliche Verdickungen sowohl auf den Seiten seines Sitzteiles (2) als auch auf den Seiten des Rückens (3) aufweist.


**Claims**

1. A motor vehicle seat having a rigid frame (10) and flexible upholstery covering the frame and constituting at least two side pads (7) adjustable in the transverse direction of the seat, each one of the side pads (7) comprising;
   - an articulation support (15) rigidly fixed on the frame (10) and defining an axis of articulation (13) situated in a lateral substantially longitudinal plane relative to the seat (1),
- a bearing plate (18) rigidly fixed on the frame (10) along a lateral substantially longitudinal plane,
- an inflatable bag (21),
   characterized in that each one of the said side pads (7) also comprises:
- a casing (11) forming a shell covered by the upholstery (12) constituting the pad (7) properly so-called, so as to give the pad a general shape substantially independent of its adjustment, pivotably mounted on the articulation pin (13) in the transverse direction (14) of the seat (1), the bearing plate (18) being disposed at least partly inside the casing (11), the said inflatable bag (21) being situated inside the casing (11), interposed between the internal wall of the casing (11) and the bearing plate (18), towards the inside of the seat (1),
- and at least one resilient restoring device (22) interposed between the internal wall of the casing (11) and the bearing plate (18) towards the outside of the seat (1).

2. A vehicle seat according to claim 1, characterised in that the bearing plate (18) is fixed at one of its ends on a bar (10b) of the frame (10) and at its other end, on a portion of the articulation support (15).

3. A vehicle seat according to claim 2, characterised in that the bearing plate (18) is fixed by clip action on the frame (10) and the articulation support (15).

4. A vehicle seat according to any one of claims 1 to 3, characterized in that the articulation support (15) consists of a rigid structure of a bent metallic wire fixed by welding on a bar (10b) of the frame (10) and constituting two aligned shaft ends (15a, 15b) parallel to the frame bar (10b).

5. A vehicle seat according to any one of claims 1 to 4, characterized in that the inflatable bag is connected for its inflation to a manual device such as a bulb.

6. A vehicle seat according to any one of claims 1 to 4, characterized in that the inflatable bag is connected for its inflation to an electric pneumatic device such as a motorized pump.

7. A vehicle seat according to any one of claims 1 to 6, characterized in that the casing (11) consists of two half-casings comprising assembly means.

8. A vehicle seat according to any one of claims 1 to 7, including a seat part (2) and a back (3), characterized in that it includes adjustable side pads (7) only at the sides of the back (3).

9. A vehicle seat according to any one of claims 1 to 7, including a seat part (2) and a back (3), characterized in that it includes adjustable side pads both on the sides of its seat part (2) and on the sides of the back (3).

FIG.1

FIG.4

EP 0 343 025 B1

FIG. 2

FIG. 3